# EUROPÄISCHE PATENTSCHRIFT

(11) **EP 0 477 652 B1**
(45) Veröffentlichungstag und Bekanntmachung des Hinweises auf die Patenterteilung: **20.11.1996**
(21) Anmeldenummer: 91115294.0
(22) Anmeldetag: 10.09.1991
(51) Int. Cl.: H04Q 3/545, H04Q 11/04

(54) **Verfahren zur wertigkeitsgesteuerten Verarbeitung von Informationen bzw. Prozessen in einem Kommunikationssystem**
Priority controlled processing of information, especially of processes in a communication system
Méthode de traitement controlé par priorité des informations, en particulier des processus dans un système de communication

(30) Priorität: 28.09.1990 DE 4030772
(43) Veröffentlichungstag der Anmeldung: 01.04.1992
(73) Patentinhaber: SIEMENS AKTIENGESELLSCHAFT, 80333 München (DE)
(72) Erfinder: Reinhard, Frank, Dipl.-Ing., W-1000 Berlin 12 (DE)

(56) Entgegenhaltungen:
- US-A- 4 418 396
- PATENT ABSTRACTS OF JAPAN vol. 12, no. 480 (P-801)15. Dezember 1988 & JP-A-63 197 218

## Beschreibung

In Kommunikationssystemen, insbesondere Kommunikationsvermittlungsanlagen, werden vermittlungstechnischen-, betriebs- oder sicherheitstechnischen Informationen - z.B. Meldungen und Anweisungen - oder Prozessen Wertigkeiten bzw. Prioritäten zugeordnet und in Abhängigkeit von den zugeordneten Prioritäten in Steuereinrichtungen der Kommunikationssysteme, z.B. in peripheren oder zentralen Steuereinrichtungen, weiterverarbeitet. Häufig sind hierbei für die sicherheitstechnischen Informationen bzw. Prozesse die höchsten, für die vermittlungstechnischen Informationen und Prozesse die mittleren und für die betriebstechnischen Informationen und Prozesse die niedrigsten Wertigkeiten bzw. Prioritäten vorgesehen.

Die einzelnen mit Prioritäten versehenen Informationen bzw. Prozesse werden in Abhängigkeit von den ihnen zugeordneten Wertigkeiten bzw. Prioritäten in Speichern bzw. Speicherbereichen eines Speichers zusammengefaßt, wobei jedem Speicherbereich eine Wertigkeit bzw. Priorität zugeordnet ist. In den Speicherbereichen werden die Informationen bzw. Prozesse seriell, eine sogenannte "Warteschlange", wie z. Bsp. in der US-A-4 418 396 beschrieben bildend, gespeichert und bei einem Abruf durch z.B. eine zentrale Steuerung an diese weitergeleitet und verarbeitet. Bei einer derartigen wertigkeits- bzw. prioritätsgesteuerten Weiterverarbeitung der Informationen bzw. Prozesse durch eine zentrale oder dezentrale Steuerung werden die in den Speicherbereichen zwischengespeicherten Informationen bzw. Prozesse mit der höchsten Wertigkeit bzw. Priorität bevorzugt an die Steuerung weitergeleitet und dort verarbeitet.

Das Suchen der höchstwertigsten Informationen bzw. Prozesse wird bekannterweise derart durchgeführt, daß die Speicherbereiche, beginnend mit dem höchstwertigsten, nacheinander auf das Vorhandensein von weiterzuverarbeitenden Informationen bzw. Prozessen überprüft werden. Bekannterweise wird hierbei nicht der vollständige, sondern lediglich ein Teil eines Speicherbereichs überprüft. In diesen Speicherbereich ist eine binäre Information, die das Vorhandensein von Informationen bzw. Prozesse in dem zugeordneten großen Speicherbereich anzeigt, eingetragen. Beispielsweise wird durch Eintragen einer den Binärwert 1 beinhaltenden binären Information das Vorhandensein zumindest einer Information bzw. eines Prozesses im zugeordneten Speicherbereich angegeben. Desweiteren ist allgemein bekannt, daß durch eine verarbeitungsbereite Steuereinrichtung des Kommunikationssystem die binäre Informationen enthaltenden Speicherbereiche nacheinander, beginnend mit dem Speicherbereich, dem die höchstwertigste Priorität zugeordnet ist, auf das Vorhandensein einer vorgegebenen binären Information und damit eines Prozesses überprüft werden. Nachdem eine vorgegebene binäre Information festgestellt wurde, wird die Information bzw. der Prozeß des zugeordneten Speicherbereichs an die Steuereinrichtung weitergeleitet und dort verarbeitet. Sind beispielsweise 16 Wertigkeiten bzw. Prioritäten erforderlich, so sind insbesondere bei dem Suchen nach den niederwertigsten aktuellen Informationen bzw. Prozessen bis zu maximal 16 Überprüfungsschritte erforderlich. Da bei dem angegebenen Beispiel von 16 Prioritäten den vermittlungstechnischen Informationen bzw. Prozessen die mittleren Wertigkeiten, also die Wertigkeiten von 6 bis 10 zugeordnet sind, sind bei ungestörtem Vermittlungsbetrieb des Kommunikationssystems durchschnittlich 8 Überprüfungsvorgänge erforderlich. Dieses mehrmalige Überprüfen der Speichereinrichtungen auf das Vorhandensein von binären Informationen stellt neben der Zeitverzögerung eine zusätzliche dynamische Belastung für die zentralen oder dezentralen Steuerungen eines Kommunikationssystems dar.

Die der Erfindung zugrundeliegende Aufgabe ist darin zu sehen, die Anzahl der Überprüfungsvorgänge insbesondere bei Verwendung einer großen Zahl von Wertigkeiten bzw. Prioritäten zu reduzieren. Die Aufgabe wird durch die Merkmale des Anspruchs 1 gelöst.

Der wesentliche Aspekt des erfindungsgemäßen Verfahrens ist darin zu sehen, daß die Speicherbereiche der Speicherbereichfolgen nicht nacheinander überprüft, sondern mehrmals in 2^{x}-orientierte Teilspeicherbereiche aufgeteilt und diese auf das Vorhandensein einer vorgegebenen binären Information untersucht werden. Eine 2^{m} Speicherbereiche umfassende Speicherbereichfolge wird hierbei in zwei Speicherbereichfolgen aufgeteilt, die je 2^{m-1} Speicherbereiche repräsentieren. In dieser Teilspeicherbereichfolge wird in dem dem Speicherbereichfolgeanfang oder -ende nächstgelegenen Speicherbereich und danach in dem folgenden Speicherbereich der Teilspeicherbereichfolge das Vorhandensein einer vorgegebenen binären Information überprüft. Anschließend werden jeweils die betroffenen Teilspeicherbereichfolgen in weitere m-1 Teilspeicherbereichfolgen aufgeteilt und in diesen nacheinander das Vorhandensein einer vorgegebenen binären Information überprüft. Das Überprüfen des Vorhandenseins einer vorgegebenen binären Information beginnt jeweils mit dem dem Speicherbereichfolgeanfang oder -ende nächstliegenden Speicherbereich. Ob der dem Speicherbereichanfang oder -ende nächstgelegene Speicherbereich überprüft wird, hängt von der Zuordnung der höchst- oder niederwertigsten Informationen bzw. Prozesse zu den Speicherbereichen der Speicherbereichfolge ab. So wird beispielsweise bei einer Zuordnung der höchstwertigsten Informationen bzw. Prozesse zu den ersten Speicherbereichen der Speicherbereichfolge - d.h. am Anfang der Speicherbereichfolge - jeweils in den dem Speicherbereichfolgenanfang nächstgelegenen Speicherbereiche der Teilspeicherbereichfolgen das Vorhandensein einer vorgegebenen binären Information, z.B. mit dem Binärwert 1, überprüft.

Der wesentliche Vorteil des erfindungsgemäßen Verfahrens ist darin zu sehen, daß bei einer 2^{m} Speicherbereiche umfassenden Speicherbereichfolge immer eine gleiche Anzahl von m Suchvorgängen bis zum Feststellen des die höchst- oder niederwertigste Information bzw. Prozeß enthaltenden Speicherbereichs erforderlich ist. Hierdurch wird bei Verwendung vieler Wertigkeiten bzw. Prioritäten - in Kommunikationssystemen, insbesondere in Kommunikationsvermittlungsanlagen üblich - die Anzahl der Suchvorgänge, insbesondere bei ungestörten vermittlungstechnischem Betrieb erheblich reduziert und die zentrale oder dezentrale Steuerung gleichmäßig, jedoch durchschnittlich erheblich geringer belastet.

Für die Aufteilungen der Speicherbereichfolgen und die Überprüfungen hinsichtlich des Vorhandenseins binärer vorgegebener Informationen sind zwei Realisierungsvarianten möglich.

Bei einer ersten Variante werden die vorgegebenen binären Informationen der Speicherbereichfolge zu einer einzigen, 2^{m}-stelligen binären Information zusammengefaßt - Anspruch 2. Hierbei ist in jeden Speicherbereich der Speicherbereichfolge beispielsweise eine binäre Information mit dem Binärwert 0 oder eine Information mit dem Binärwert 1 eingetragen, wobei der Binärwert 1 das Vorhandensein und der Binärwert 0 das Nichtvorhandensein von Informationen oder Prozessen anzeigt. Nach der Zusammenfassung der binären Informationen repräsentieren diese, entweder vom Speicheranfang oder -ende gesehen, eine einzige, 2^{m}-stellige Binärzahl.

Die Aufteilung in zwei Teilspeicherbereichfolgen wird anschließend durch Vergleich der die Speicherbereichinhalte repräsentierenden Binärzahl mit der Binärzahl 2^{(m-1)} erreicht. Bei dem Binärzahlenvergleich ist zu berücksichtigen, daß die Binärzahlen jeweils vom Speicherbereichfolgenanfang oder -ende beginnend - je nach Zuordnung der Wertigkeiten bzw. Prioritäten - definiert und verarbeitet werden. Durch den Binärzahlenvergleich wird festgestellt, in welchem der beiden Teilspeicherbereiche eine binäre Information mit dem Binärwert 1 auftritt. Tritt in dem die höchstwertigen Informationen bzw. Prozesse repräsentierenden Speicherbereich eine binäre Information mit dem Binärwert 1 auf - d.h. liegt eine höherwertige Information bzw. Prozeß zur Verarbeitung vor - , so wird diese 2^{(m-1)} Speicherbereiche repräsentierende Binärzahl mit einer Binärzahl 2^{(m-2)} verglichen. In Abhängigkeit von dem Auftreten der binären Information mit dem Binärwert 1 wird die den betroffenen Speicherbereich repräsentierende 2^{(m-2)}-stellige Binärzahl mit der Binärzahl 2^{(m-3)} verglichen. Analog zu den vorhergehend erläuterten Binärzahlenvergleichen sind m Binärzahlenvergleiche bis zum Feststellen des die aktuell höchstwertigen Informationen bzw. Prozesse speichernden Speicherbereichs durchzuführen.

Bei einer weiteren Realisierungsvariante hinsichtlich des Aufteilens der Speicherbereichfolgen und Überprüfens der binären Informationen bzw. Prozesse werden jeweils zwei Speicherbereichen der Speicherbereichfolge ein Suchspeicher zugeordnet - Anspruch 3 -. Diese Suchspeicher bilden aneinandergereiht eine erste Suchspeicherfolge. Jeweils zwei der Suchspeicher der ersten Suchspeicherfolge sind wiederum einem weiteren Suchspeicher zugeordnet. Diese Suchspeicher bilden eine zweite Suchspeicherfolge. Das Zuordnen von zwei Suchspeichern einer x-ten Suchspeicherfolge wird analog zu den vorstehenden Bildungsverfahren bis zu einer m-ten Suchspeicherfolge durchgeführt. Diese m-te Suchspeicherfolge enthält lediglich noch einen Suchspeicher.

In die Suchspeicher einer x-ten Suchspeicherfolge wird in Abhängigkeit von dem Auftreten einer oder zweier binärer Informationen in den beiden zugeordneten Suchspeichern der (x-1)-ten Suchspeicherfolge eine binäre Information eingetragen. Beispielsweise wird in den Suchspeicher der x-ten Suchspeicherfolge eine binäre Information mit dem Binärwert 1 eingetragen, wenn einer oder beide zugeordnete Suchspeicher der (x-l)-ten Suchspeicherfolge eine "logische 1"-Information aufweisen - logische ODER-Verknüpfung. Hierdurch wird beispielsweise angezeigt, das in zumindest einem dem Suchspeicher zugeordneten Speicherbereich eine Information bzw. ein Prozeß im Sinne einer Weiterverarbeitung vorliegt.

Ein Suchvorgang nach beispielsweise dem Speicherbereich, in dem die aktuell höchstwertigste Information bzw. Prozeß vorliegt, wird durch Abfragen des Suchspeichers in der m-ten Suchspeicherfolge eingeleitet. Wird in diesem eine binäre Information mit dem Binärwert 1 festgestellt, so bedeutet dies, daß zumindest eine Information irgendeiner Priorität bzw. Wertigkeit im Sinne einer Weiterverarbeitung vorliegt. Vorausgesetzt, die höchstwertigsten Speicherbereiche sind am Speicherbereichfolgenanfang angeordnet, wird der dem Speicherbereichfolgenanfang nächstgelegene Suchspeicher der (m-l)-ten Suchspeicherfolge auf das Vorhandensein einer binären Information mit dem Binärwert 1 überprüft. Diese Prüfvorgänge werden in Abhängigkeit von dem Auftreten der binären Informationen mit dem Binärwert 1 bis zu den Speicherbereichen der Speicherbereichfolge wiederholt, wobei jeweils die Überprüfung der Suchspeicher und letztlich der Speicherbereiche mit dem dem Speicherbereichfolgeanfang nächstliegenden Suchspeicher bzw. Speicherbereich beginnt. Wird beispielsweise der Speicherbereich mit den Informationen bzw. Prozessen ermittelt, die die dritte Priorität bzw. Wertigkeit aufweisen, so wird eine Information oder ein Prozeß von dem zugeordneten großen Speicherbereich an die zentrale oder dezentrale Steuerung des Kommunikationssystems übermittelt und dort weiterverarbeitet.

Das erfindungsgemäße Verfahren ist desweiteren derart modifizierbar, daß die Suche nach einem höchst- oder niederwertigsten Speicherbereich einer Speicherbereichfolge nicht von einem 2^{m-1} Speicherbereiche umfassenden Teilspeicherbereich, sondern von einem einzelnen Speicherbereich der Speicherbereichfolge aus begonnen wird - Anspruch 4.

Dieses Ausgehen von einem bestimmten Speicherbereich ist dann sinnvoll, wenn von diesem Speicherbereich ausgehend der höchst- oder niederwertigste Speicherbereich aufgefunden werden soll. Ein Anwendungsfall ist beispielsweise in einem sprachpausennutzenden Übertragungssystem für die Übermittlung von Sprachinformationen zu sehen. Hierbei werden jeweils ausgehend von dem zuletzt aktuell belegten Kanal, entspricht einem Speicherbereich, die höherwertigsten Kanäle d.h. die Kanäle am Anfang der n Kanäle umfassenden Übertragungseinrichtung, gesucht und anschließend belegt.

Bei dem modifizierten erfindungsgemäßen Verfahren wird ausgehend von dem Speicherbereich der Speicherbereichfolge in dem benachbarten Speicherbereich, der einer 2ⁿ Speicherbereiche umfassenden Teilspeicherbereichfolge zugeordnet ist, das Vorhandensein einer vorgegebenen binären Information, z.B. mit dem Binärwert 1 überprüft. Ist in diesen Teilspeicherbereichen eine vorgegebene binäre Information nicht vorhanden, so wird die folgende, 2² Speicherbereiche umfassende zweite Teilspeicherbereichfolge auf das Vorhandensein von binären Informationen überprüft. Dieses Überprüfen wird, wie vorstehend erläutert, bis maximal zur n-ten, 2³ bis 2^{m} Speicherbereiche umfassenden Teilspeicherbereichfolge durchgeführt. Wird bei einer dieser Überprüfungen eine vorgegebene binäre Information festgestellt, so wird, wie bereits erläutert, das Suchen des höchst- oder niederwertigsten Speicherbereichs der Speicherbereichfolge eingeleitet. Hierbei ist zu beachten, daß das Suchen nicht von der m-ten Teilspeicherfolge sondern von einer vom Auftreten einer vorgegebenen binären Information abhängigen 2^{x-1}-ten Teilspeicherfolge aus eingeleitet wird.

Analog zu der weiteren Realisierungsvariante hinsichtlich des Aufteilens der Speicherbereichfolgen und Überprüfens der binären Informationen bzw. Prozesse ist das modifizierte erfindungsgemäße Verfahren besonders vorteilhaft mit Hilfe des Zuordnens von Suchspeichern realisierbar - Anspruch 5. Hierbei wird ausgehend von einem Speicherbereich der Speicherbereichfolge in dem zugeordneten Suchspeicher der ersten Suchspeicherfolge das Vorhandensein einer vorgegebenen binären Information, z.B. mit dem Binärwert 1, überprüft. Die Überprüfung auf das Vorhandensein einer vorgegebenen Information wird in den weiteren Suchspeicherfolgen solange fortgesetzt, bis eine vorgegebene binäre Information festgestellt wird. Nach diesem Feststellen wird die Suche nach dem höchst- oder niederwertigsten Speicherbereich gemäß dem erfindungsgemäßen Verfahren eingeleitet.

Im folgenden werden zwei Ausführungsbeispiele der Erfindung anhand von drei figürlichen Darstellungen näher erläutert.

Dabei zeigen:
- Figur 1: ein Blockschaltbild einer Kommunikationsvermittlungsanlage
- Figur 2: in einem Blockschaltbild ein erstes Ausführungsbeispiel des in der Kommunikationsvermittlungsanlage implementierten, erfindungsgemäßen Verfahren und
- Figur 3: in einem Ablaufdiagramm ein zweites Ausführungsbeispiel des in der Kommunikationsvermittlungsanlage implementierten erfindungsgemäßen Verfahren.

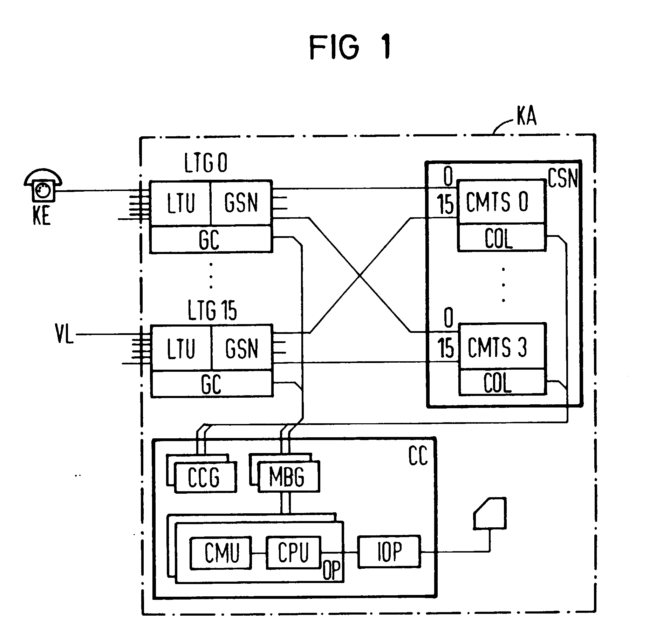

Figur 1 zeigt beispielhaft ein dem erfindungsgemäßen Verfahren zugrunde liegendes Kommunikationssystem, daß durch eine Kommunikationsvermittlungsanlage KA und durch an sie angeschlossene Kommunikationsendgeräte KE gebildet wird. Die Kommunikationsvermittlungsanlage KA ist im wesentlichen in drei hierarchische Strukturebenen unterteilt. Die im wesentlichen dem Anschluß von Kommunikationsendgeräten und Verbindungsleitungen dienende Peripherieebene wird durch maximal 16 Anschlußgruppen LTG0...LTG15 gebildet. Die Anschlußgruppen LTG0...LTG15 stellen die Bindegliezu den Kommunikationsendeinrichtungen KE sowie für die Vernetzung der weiteren Kommunikationsvermittlungsanlagen dar. Zusätzlich zu analogen und digitalen Kommunikationsendgeräten KE und analogen bzw. digitalen Verbindungsleitungen VL sind an eine Anschlußgruppe LTG0...LTG15 Vermittlungsplätze und Testeinrichtungen anschließbar.

Eine Anschlußgruppe LTG umfaßt zumindest eine Anschlußeinheit LTU, eine Gruppenkoppelstufe GSN sowie eine Gruppensteuerung GC. Die Anschlußeinheiten LTU können beispielsweise dem Anschluß analoger Kommunikationsendgeräte KE dienen. Sie weisen dann üblicherweise je Endgeräte die Schnittstelleneinrichtungen mit Ruf- und Schleifenschlußindikation auf, der jeweils eine Prozessoreinrichtung zur Digital/Analog - bzw. Analog/Digital - Wandlung und zur Einstellung der programmierbaren Eingangsindpedanz bzw. Pegelanpassung zugeordnet ist. Eine Anschlußeinheit LTU ist über eine 2,048 kbit/s - Schnittstelle nicht dargestellt - mit der Gruppenkoppelstufe GSN für die Übermittlung von PCM-orientierten Sprachinformationen und über eine 64 kbit/s Schnittstelle - nicht dargestellt - mit der Gruppensteuerung GC für die Übermittlung von Steuerinformationen verbunden.

Die Gruppenkoppelstufe GSN stellt eine blockierungsfreie Zeitkoppfelstufe mit 16 Eingängen mit 2084 kbit/s dar. In der nach dem Zeitmultiplexverfahren realisierten Gruppenkoppelstufe GSN werden die ankommenden Sprachinformationen entweder intern in der jeweiligen Anschlußgruppe LTG oder an die zentrale Koppelstufe CSN gesteuert.

In der Gruppensteuerung GC werden maximal 8 mit den Anschlußeinheiten LTU0...LTU7 verbundene 64 kbit/s - Leitungen über eine Signalmultiplexeinrichtung an eine Prozessoreinrichtung gesteuert. Diese Prozessoreinrichtung ist beispielsweise durch den Siemens Switching-Prozessor SSP 302D realisiert.

Der Gruppensteuerung sind folgende Aufgaben zugeordnet:
- Abtasten der 64 kbit/s - Steuerleitungen,
- Steuern des Informationsaustausches, insbesondere das Umwandeln der externen Schaltkennzeichen von den Teilnehmer- und Verbindungsleitungen in interne Normmeldungen für die Zentralsteuerung und umgekehrt,
- Sicherheitstechnische Überprüfungen der Anschlußeinheit sowie Takt- und Tongeneratoren,
- Überwachen der Gruppenkoppelstufenfunktionen, insbesondere Durchschalteprüfung und Überwachung der Meldungen von und zu der Zentralsteuerung CC und
- Abtasten der Alarmindikationsstellen der Übertragungsstrecken, insbesondere der PCM-Übertragungsstrecken.

Die zentrale Koppelstufe CNS stellt wie die Gruppenkoppelstufe GSN eine Zeitkoppelstufe mit vollständiger Erreichbarkeit dar. Die zentrale Koppelstufe ist aus ein bis maximal vier gleichen Zeitstufeneinheiten gebildet, die bis auf einen Konferenzspeicher und schaltbare Dämpfungen mit der Gruppenkoppelstufe GSN identisch sind. Mit Hilfe der zentralen Koppelstufe CNS werden die Verbindungen zwischen den verschiedenen Anschlußgruppen LTG0...LTG15 hergestellt. Der gesamte ankommende Sprachverkehr zwischen den Anschlußgruppen LTG0...LTG15 wird gleichmäßig auf die vier Zeitstufeneinheiten verteilt. Bei Ausfall einer Zeitstufe wird deren Verkehr - ein viertel des Gesamtverkehrs - auf die drei verbleibenden Zeitstufeneinheiten umgesteuert.

Die Zentralsteuerung CC ist durch
- einen Zentralprozessor CP, der aus einer Zentralprozessoreinheit CPO und einer zentralen Speichereinheit CMU besteht,
- einer Nachrichtenverteilerbaugruppe MBG,
- einer zentralen Taktgebereinrichtung CCG sowie
- einem Ein-/Ausgabeprozessor IOP gebildet,
- wobei alle Komponenten der Zentralsteuerung CC - außer dem zentralen Taktgeber CCG - über ein zentrales Bussystem verbunden sind. Der Zentralprozessor ist durch den Siemens Switching-Prozessor SSP 303 realisiert. Die vermittlungs-, betriebs- und sichterheitstechnischen Programme sind in der zentralen Speichereinheit CMU gespeichert. Die maximale Daten- und Programmspeicherkapazität ist hierbei mit 1 Megabit vorgesehen.

Die Nachrichtenverteilergruppe MBG bildet für den Zentralprozessor CP die Schnittstelle zur zentralen Koppelstufe CSN und zu den Anschlußgruppen LTG0...LTG15. In der Nachrichtenverteilergruppe MBG werden die Informationen vorübergehend gespeichert und die von den peripheren Einrichtungen übermittelten Informationen in Format und Geschwindigkeit den Bedingungen des Zentralprozessors angepaßt. Über die Verbindungen zur zentralen Koppelstufe werden die der Steuerung der zentralen Zeitstufeneinheiten dienenden Kommandos für den Aufbau und das Auslösen von Verbindungen sowie Quitierungsinformationen übertragen.

Periphere Einrichtungen werden über die Ein-/Ausgabeeinrichtungen IOP mit dem Zentralprozessor CP verbunden. Derartige periphere Einrichtungen sind beispielsweise Speichereinrichtungen wie Floppy - Disk. Über eine ebenfalls über eine Ein-/Ausgabeeinrichtung IOP realisierte V24./RS232-Schnittstelle kann ein Betriebstechnikendgerät, z.B. ein Bildschirmterminal, angeschlossen werden.

Die Kommunikationsvermittlungsanlage KA wird von einem duplizierten zentralen Taktgenerator CCG über eine in diesem realisierte Taktverteileinrichtung mit den entsprechenden Taktsignalen versorgt. Hierbei wird ein Taktgenerator als Betriebstaktgenerator bestimmt und die Taktsignale des duplizierten Taktgenerators werden synchron zu den Taktsignalen des Betriebstaktgenerators gehalten. Durch die Synchronisation der Taktgeneratoren werden bei einer Umschaltung auf den duplizierten Taktgenerator Taktsignal-Phasensprünge vermieden.

In der Gruppen- und in der Zentralsteuerung GC, CC sind vermittlungstechnische, betriebs- und sicherheitstechnische Programme implementiert. Die vermittlungstechnischen Programme umfassen hierbei die Steuerung aller vermittlungstechnischen Funktionen, wie z.B. Auf- und Abbau von Verbindungen. Als Anreize für den Ablauf von vermittlungstechnischen Programmen werden von den Gruppensteuerungen GC zur Zentralsteuerung CC Zustandsänderungen der Peripherie übermittelt. Im Zentralprozessor CC werden diese Anreize bewertet und entsprechende Steuerinformationen bzw. Anweisungen gebildet, die an die Gruppensteuerung GC bzw. an die zentrale Koppelstufe CSN übermittelt werden.

Für die Bewertung der Anreize sowie das Bilden von Anweisungen sind Informationen erforderlich, die in einer "sogenannten" Datenbasis hinterlegt sind. Derartige Informationen sind beispielsweise Leitungs- oder Rufnummern, Berechtigungen usw..

Das erfindungsgemäße Verfahren ist bei einer derart realisierten Kommunikationsvermittlungsanlage KA in der Zentralsteuerung CC implementiert. Dort werden die aktuell zu verarbeitenden vermittlungs-, sicherheits-, und betriebstechnischen Informationen bzw. Prozesse in Speicherbereichen der zentralen Speichereinheit CMU gespeichert. Entsprechend der den Informationen bzw. Prozessen zugehörigen Prioritäten werden diese in Speicherbereichen hinterlegt, die eine entsprechende Priorität aufweisen. Für das Ausführungsbeispiel sei angenommen, daß 16 unterschiedliche Prioritäten und damit 16 Speicherbereiche vorgesehen sind. Hierbei sind beispielsweise den sicherheitstechnischen und den in Realzeit zu verarbeitenden Informationen bzw. Prozessen die höchsten Prioritäten, z.B. die Prioritäten 1 bis 6, den vermittlungstechnischen Informationen bzw. Prozessen die Prioritäten 7 bis 10 und den betriebstechnischen Informationen bzw. Prozessen die niedrigsten Prioritäten, z.B. 11 bis 16 zugeordnet.

In den Speicherbereichen werden die für eine Weiterverarbeitung vorgesehenen Informationen und Prozesse entsprechend den jeweils angegebenen Prioritäten in den jeweiligen Speicherbereichen zusammengefaßt. In einem kleinen Teil dieses großen Speicherbereichs ist ein Speicherbereich vorgesehen, in dem das Vorliegen von zur Weiterverarbeitung vorgesehenen Informationen angezeigt wird. Dieser Speicherbereich weist beispielsweise eine Größe von einem Bit auf. Liegt eine Information bzw. ein Prozeß vor, so wird beispielsweise eine binäre Information mit dem Binärwert 1 eingetragen. Analog hierzu wird dieser Speicherbereich bei einem Nichtvorliegen von Informationen bzw. Prozessen mit einer binären Information mit dem Binärwert 0 versehen. Die für das Ausführungsbeispiel angenommenen 16 Speicherbereiche bilden zusammen eine Speicherbereichfolge.

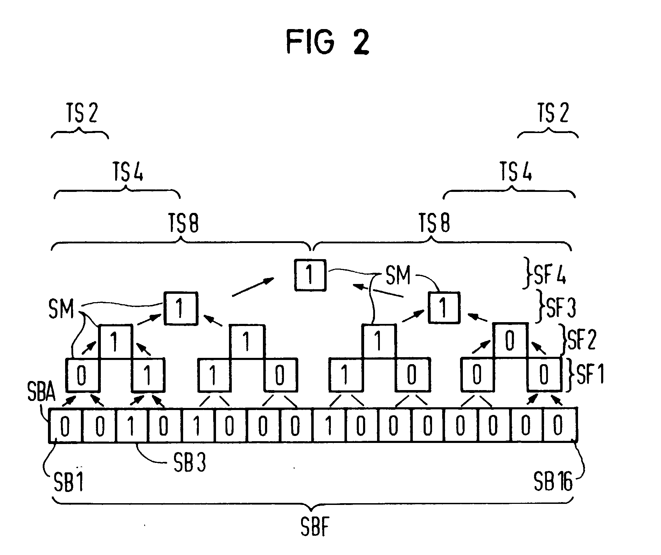

In Figur 2 ist eine derartige Speicherbereichfolge SBF dargestellt. Diese Speicherbereichfolge SBF ist durch 16 Speicherbereiche SB1...SB16 gebildet. In jede dieser Speicherbereiche ist eine binäre Information mit dem Binärwert 1 oder 0 eingetragen. Für das Ausführungsbeispiel sei des weiteren angenommen, daß die Prioritätsreihenfolge der Speicherbereichsreihenfolge entspricht, d.h. 1 bis 16 Prioritäten. Die höchstwertigste Priorität stellt hierbei die Priorität 1 dar. Die Prioritäten sind auch in umgekehrter Reihenfolge angebbar und sind an den jeweiligen Anwendungsfall anzupassen. Wie bereits erläutert repräsentieren die binären Informationen das Vorliegen bzw. das Nichtvorliegen von Informationen bzw. Prozessen in dem diesem kleinen Speicherbereich SB zugeordneten größeren Speicherbereich.

Der Speicherbereichfolge SFB sind vier Suchspeicherfolgen SF1... SF4 zugeordnet. Hierbei sind jeweils zwei aufeinanderfolgende Speicherbereiche SB1..SB16 der Speicherbereichfolge SFB einem Suchspeicher SM der ersten Suchspeicherfolge SF1 zugeordnet. Des weiteren sind jeweils zwei Suchspeicher der ersten, zweiten und dritten Suchspeicherfolge SF1...SF3 jeweils einem Suchspeicher der zweiten, dritten und vierten Suchspeicherfolge SF2..SF4 zugeordnet. In die Suchspeicher SM wird jeweils eine binäre Information mit dem Binärwert 1 eingetragen, wenn in einem der beiden oder in beiden zugeordneten Suchspeichern SM oder Speicherbereichen SB1..SB16 eine binäre Information mit dem Binärwert 1 vorliegt. Dies entspricht einer logischen ODER-Verknüpfung.

Durch die im Ausführungsbeispiel angegebenen binären Informationen in den Speicherbereichen SB1...SB16 ist bestimmt, daß im dritten Speicherbereich SB3 zumindest eine aktuell höchstwertigste Information bzw. Prozeß und in den zwei weiteren Speicherbereichen SB5, SB9 niederwertigere Informationen bzw. Prozesse vorliegen. Mit Hilfe der in den Speicherbereichen SB1...SB16 und in den Suchspeichern SM vorliegenden binären Informationen werden entsprechend einer ODER-Verknüpfung die binären Suchinformationen ermittelt und in die Suchspeicher SM der vier Suchspeicherfolgen SF1..SF4 eingetragen. Sowohl die Speicherbereiche SB1..SB16 als auch die Suchspeicher SM sind als 1 Bit große Speicher in der zentralen Speichereinheit CMU realisierbar. Nach einem Verarbeiten einer Information bzw. eines Prozesses durch den Zentralprozessor CP wird von diesem die Suche nach der höchstwertigsten, zu verarbeitenden Information bzw. Prozeß eingeleitet. Hierbei wird durch Abfragen des Suchspeichers SM in der vierten Suchspeicherfolge SF4 überprüft, ob eine weiterzuverarbeitende Information bzw. Prozeß irgendeiner Wertigkeit vorliegt. Bei Feststellen einer binären Information mit dem Binärwert 1 liegt zumindest eine weiterzuverarbeitende Information bzw. ein Prozeß vor. Da die die höchstwertigsten Informationen bzw. Prozesse enthaltenden Speicherbereichen SB am Speicherbereichsfolgenanfang SBA auftreten, wird der dem Speicherbereichfolgenanfang SBA nächstgelegene Suchspeicher SM auf das Vorhandensein einer binären Information mit dem Binärwert 1 abgefragt. Da auch hier eine binäre Information mit dem Binärwert 1 festgestellt wurde, liegt zumindest eine weiterzuverarbeitende Information bzw. ein Prozeß in einem der ersten acht Speicherbereiche SB1..SB8 vor. Bei 2^{m}, im Ausführungsbeispiel 2⁴ Speicherbereichen SB1..SB16 umfassen diese ersten Teilspeicherbereiche TS8 jeweils 2^{m-1}, im Ausführungsbeispiel 2³ Speicherbereiche SB. Anschließend wird das Abfragen in den dem Speicherbereichsfolgenanfang SBA nächstgelegenen Suchspeichern SM fortgesetzt. Da auch hier eine binäre Information mit dem Binärwert 1 vorliegt, liegt zumindest eine Information bzw. ein Prozeß in einem der ersten vier Speicherbereiche SB1..SB4 vor. Hierbei bilden jeweils 2^{m-2}, d.h. vier Speicherbereiche SB der Speicherbereichfolge SBF, weitere 2^{m-2} Teilspeicherbereiche TS4. Bei dem Abfragen des dem Speicherbereichfolgenanfang SBA nächstgelegenen Suchspeichers SM wird eine binäre Information mit dem Binärwert 1 festgestellt. Dies bedeutet, daß in den diesem Suchspeicher zugeordneten ersten und zweiten Speicherbereichen SB1, SB2 keine weiterzuverarbeitenden Informationen bzw. Prozesse vorliegen. Nach dem Feststellen der binären Information mit dem Binärwert 1 wird der in der Suchspeicherfolge SF1 benachbarte Suchspeicher SM auf das Vorhandensein einer binären Information mit dem Binärwert 1 abgefragt. Da in diesem Suchspeicher SM eine binäre Information mit dem Binärwert 1 festgestellt wird, liegt im dritten oder vierten Speicherbereich SB3, SB4 eine Information bzw. ein Prozeß vor. Den Suchspeichern SM der ersten Suchspeicherfolge SF1 sind jeweils 2^{m-3}, im Ausführungsbeispiel 2¹, Speicherbereiche zugeordnet. Im Ausführungsbeispiel bilden diese beiden Speicherbereiche SB jeweils eine weitere Teilspeicherfolge TS2. Anschließend wird in der den dritten und vierten Speicherbereich SB3, SB4 enthaltenden Teilspeicherfolge TS2, beginnend mit dem dem Speicherbereichsanfang SBA nächstliegenden dritten Speicherbereich, das Vorliegen einer binären Information mit dem Binärwert 1 überprüft. Da im dritten Speicherbereich SB3 eine binäre Information mit dem Binärwert 1 festgestellt wird, werden die diesem dritten Speicherbereich SB3 zugeordneten Informationen bzw. Prozesse im Sinne einer Weiterverarbeitung an den Zentralprozessor CP weitergeleitet. In Abhängigkeit vom jeweiligen Anwendungsfall können alle vorliegenden Prozesse bzw. Informationen dieses Speicherbereichs SB3 oder nur einer weiterverarbeitet werden, bevor das Suchen nach einer höchstwertigsten Information bzw. einem Prozeß erneut eingeleitet wird.

Durch eine andere logische Verknüpfung der jeweils in zwei Speicherbereichen SB oder Suchspeichern SM vorliegenden binären Informationen, z.B. durch eine UND-Verknüpfung, sind auch andere Suchvorgänge, wie z.B. die Suche nach einem höchstwertigsten Speicherbereich, der noch nicht mit Informationen bzw. Prozessen belegt ist. Dies ist beispielsweise in Kommunikationssystemen vorteilhaft, bei denen die Informationen bzw. Prozesse möglichst am Speicherbereichsanfang SBA gespeichert werden sollen. Derartige Belegungsarten treten in der Vermittlungstechnik insbesondere bei Belegen von Leitungen häufig auf.

Wie bereits erläutert, sind in Kommunikationssystemen die vermittlungstechnischen Informationen bzw. Prozesse mit mittleren Prioritäten, bezogen auf unser Ausführungsbeispiel, mit den Prioritäten 7 bis 10 versehen. Bei Einsatz des erfindungsgemäßen Verfahren sind insgesamt vier Überprüfungsvorgänge erforderlich, um eine Information mit der aktuell höchstwertigsten Priorität zu ermitteln, unabhängig davon in welchem der 16 Speicherbereiche des SB1..SB16 diese Information gespeichert ist. Bei Anwendung des bekannten Verfahrens würden die vermittlungstechnischen Informationen bzw. Prozesse durchschnittlich nach 8 Überprüfungsvorgängen gefunden werden. Mit Hilfe des erfindungsgemäßen Verfahrens kann diese Anzahl von Überprüfungsvorgängen somit halbiert werden. Dies stellt eine erhebliche zeitliche Reduzierung und eine wesentliche dynamische Entlastung der Zentralsteuerung CP dar. Insgesamt ist festzustellen, daß je mehr Prioritäten in einem Kommunikationssystem auftreten, je vorteilhafter das erfindungsgemäße Verfahren anzuwenden ist.

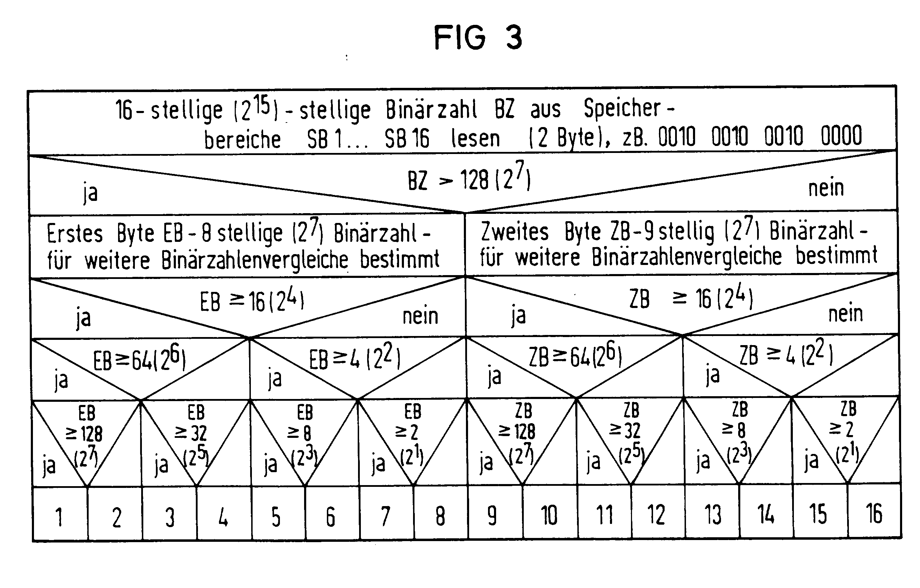

In Figur 3 ist anhand eines selbsterläuternden Struktogrammes (Nassi-Shneiderman-Diagramm) ein weiteres Ausführungsbeispiel des erfindungsgemäßen Verfahrens dargestellt. Hierbei werden die binären Informationen der 16 Speicherbereiche SB1..SB16 gelesen und als eine 16-stellige Binärzahl an die Verarbeitungseinrichtung der Zentralsteuerung CC weitergeleitet. Die weiteren Verarbeitungsschritte entsprechen den in der Figur 3 dargestellten Binärzahlenvergleichen. Um mehrstellige Binärzahlenvergleiche zu vermeiden, wird nach dem ersten Binärzahlenvergleich lediglich die das erste oder die das zweite Byte EB, ZB repräsentierende Binärzahl für die folgenden Binärzahlenvergleiche herangezogen. Bei dem in Figur 3 angegebenen Beispiel wird der dritte Speicherbereich - in Figur 3 durch die Zahl 3 dargestellt - ermittelt und die in diesem Speicherbereich hinterlegten Informationen bzw. Prozesse im Sinne einer Weiterverarbeitung an die zentrale Steuerung CC übermittelt. Anstelle der Aufteilung in ein erstes und zweiten Bytes können für die Binärzahlenvergleiche auch bis zu 2¹⁵-stellige Binärzahlen verwendet werden.

## Patentansprüche

1. Verfahren zum Suchen eines höchst- oder niederwertigsten Speicherbereiches SB einer durch n - n ≤ 2^{m}- Speicherbereiche (SB1...SB16) gebildeten Speicherbereichfolge (SBF) im Sinne einer Weiterverarbeitung von dem gefundenen Speicherbereich (SB) zugeordneten und in einem Kommunikationssystem gebildeten vermittlungs-, betriebs- oder sicherheitstechnischen Informationen,
- bei dem der Speicherbereichfolge (SBF) n Wertigkeiten (1...16), beginnend mit dem Speicherbereichfolgenanfang (SBA) oder -ende, in auf- oder absteigender Reihenfolge zugeordnet sind und
- das Vorhandensein oder Nichtvorhandensein einer weiterzuverarbeitenden, eine vorgegebene Wertigkeit aufweisenden, vermittlungs-, betriebs- oder sicherheitstechnischen Information durch Speichern zweier unterschiedlicher binärer Informationen in dem der vorgegebenen Wertigkeit entsprechenden Speicherbereich (SB) angezeigt wird,
- bei dem die Speicherbereichfolge (SBF) in zwei gleich große, 2^{m-1} Speicherbereiche umfassende Teilspeicherbereichfolgen (TS) aufgeteilt wird,
- bei dem die Teilspeicherbereichfolgen (TS), beginnend mit der dem Speicherbereichfolgenanfang (SBA) oder -ende nächstliegenden, auf das Vorhandensein von zumindest einem vorgegebene binäre Information aufweisenden Speicherbereich (SB) überprüft werden,
- bei dem diejenige Teilspeicherbereichfolge (TS), in der zumindest ein eine vorgegebene binäre Information aufweisender Speicherbereich (SB) festgestellt wurde, erneut in zwei gleich große, 2^{m-2} Speicherbereiche (SB) umfassende Teilspeicherbereiche (TS) aufgeteilt und diese auf das Vorhandensein von vorgegebene binäre Informationen aufweisenden Speicherbereichen (SB) überprüft wird und
- bei dem die Aufteilung und Überprüfung auf das Vorhandensein von vorgegebene binäre Informationen aufweisenden Speicherbereichen (SB) bis zum Erreichen einer 2¹ Speicherbereiche (SB) umfassenden Teilspeicherbereichfolge (TS) durchgeführt wird.

2. Verfahren nach Anspruch 1,
**dadurch gekennzeichnet**,
- daß die n Speicherbereichen (SB1...SB16) zugeordneten binären Informationen der Speicherbereichfolge (SBF) speicherbereichfolgenaufsteigend oder -absteigend zu einer binären, n-stelligen Binärzahl (B) zusammengefaßt werden,
- daß das Suchen des höchst- oder niederwertigsten, eine vorgegebene binäre Information aufweisenden Speicherbereichs (SB) derart durchgeführt wird,
- daß die n-stellige Binärzahl hinsichtlich ihrer Binärwertgröße mit einer den Binärwert 2^{(m-1)} repräsentierenden Binärzahl (B) verglichen wird,
- daß die gegenüber dem Binärwert 2^{(m-1)} kleinere oder größere Teilbinärzahl (EB, ZB) hinsichtlich ihrer Binärwertgröße mit einer den Binärwert 2^{(m-2)} repräsentierenden Binärzahl verglichen wird und
- daß weitere m-2 Binärzahlenvergleiche hinsichtlich der Binärwertgröße der jeweiligen, in Abhängigkeit von der durch das Vergleichsergebnis bestimmten Teilbinärzahl mit jeweils vorgegebenen, die Binärwerte 2^{(m-3)} bis 2¹ repräsentierenden Binärzahlen durchgeführt werden.

3. Verfahren nach Anspruch 1,
**dadurch gekennzeichnet**,
- daß jeweils zwei aufeinanderfolgende Speicherbereiche (SB) der Speicherbereichfolge (SBF) einem Suchspeicher (SM) zugeordnet sind und diese Suchspeicher (SM) eine erste Suchspeicherfolge (SF1) bilden
- daß in Abhängigkeit von dem Vorhandensein von ein oder zwei vorgegebenen binären Informationen in den jeweils zwei zugeordneten Speicherbereichen (SB) in den zugeordneten Suchspeicherbereichen (SM) eine binäre Suchinformation eingetragen wird,
- daß jeweils zwei aufeinanderfolgende Suchspeicher (SM) der ersten Suchspeicherfolge (SF1) jeweils in weiteren Suchspeichern (SM), eine zweite Suchspeicherfolge (SF2) bildend, zugeordnet werden und in Abhängigkeit von dem Vorhandensein der in die beiden zugeordneten Suchspeicher (SM) eingetragenen binären Suchinformationen eine weitere binäre Suchinformation in den zugeordneten Suchspeichern (SM) eingetragen wird,
- daß das Zuordnen von zwei Suchspeichern (SM) einer x-ten Suchspeicherfolge (SF) zu einem Suchspeicher (SM) der (x+1)-ten Suchspeicherfolge (SF) und dem Eintragen der binären Informationen in diese Suchspeicher (SM) der (x+1)-ten Suchspeicherfolge (SF) in Abhängigkeit von in den in die Suchspeicher (SM) der x-ten Suchspeicherfolge (SF) eingetragenen binären Informationen bis maximal zur m-ten Suchspeicherfolge (SF4) durchgeführt wird und
- daß in den Suchspeicherfolgen (SF1...SF4), beginnend in der m-ten Suchspeicherfolge (SF4), und jeweils beginnend in dem dem Suchspeicherfolgenanfang (SBA) oder -ende nächstgelegenen Suchspeicher (SM) das Vorhandensein einer vorgegebenen binären Information überprüft wird, wobei in Abhängigkeit von dem Auftreten der vorgegebenen binären Informationen in den jeweiligen Suchspeichern (SM) die beiden, diesem zugeordneten weiteren Suchspeicher (SM) überprüft werden.

4. Verfahren zum Suchen eines höchst- oder niederwertigsten Speicherbereiches (SB) einer durch n, n ≤ 2^{m} Speicherbereiche (SB1...SB16) gebildeten Speicherbereichfolge (SBF) im Sinne einer Weiterverarbeitung von dem gefundenen Speicherbereich (SB) zugeordneten und in einem Kommunikationssystem gebildeten vermittlungs-, betriebs- oder sicherheitstechnischen Informationen, bei dem der Speicherbereichfolge (SBF) n Wertigkeiten (1...16), beginnend mit dem Speicherbereichfolgeanfang (SBA) oder -ende, in auf- oder absteigender Reihenfolge zugeordnet sind und
- das Vorhandensein oder Nichtvorhandensein einer weiterzuverarbeitenden, eine vorgegebene Wertigkeit aufweisenden, vermittlungs-, betriebs- oder sicherheitstechnischen Informationen durch Speichern zweier unterschiedlicher binären Informationen in dem der vorgegebenen Wertigkeit entsprechenden Speicherbereich (SB) angezeigt wird,
- bei dem ausgehend von einem Speicherbereich (SB) der Speicherbereichsfolge (SBF) in dem benachbarten dem Speicherbereichfolgenanfang SAB oder -ende nächstliegenden Speicherbereich (SB), der einer 2¹ Speicherbereiche umfassenden Teilspeicherbereichfolge (TS) zugeordnet ist, das Vorhandensein einer vorgegebenen binären Information überprüft wird,
- bei dem bei Nichtvorhandensein einer vorgegebenen binären Information die 2² Speicherbereiche (SB) umfassende zweite Teilspeicherbereichfolge (TS) und bei weiteren Nichtvorhandensein von vorgegebenen binären Informationen die 2³ bis 2^{m} Speicherbereiche (SB) umfassenden, maximal m Teilspeicherbereichfolgen (TS), beginnend mit den Speicherbereichfolgenanfang oder -ende nächstliegenden Speicherbereichen (SB), auf das Vorhandensein vorgegebener binärer Information überprüft werden,
- bei dem bei einem Feststellen einer binären Information in einer 2^{x} Speicherbereiche (SB) umfassenden Teilspeicherfolge (TS) diese in (2^{x}-1) umfassende Teilspeicherfolgen (TS) aufgeteilt wird,
- bei dem die beiden Teilspeicherbereichfolgen (TS), beginnend mit der dem Speicherbereichfolgenanfang (SBA) oder -ende nächstliegenden, auf das Vorhandensein von zumindest eine vorgegebene binäre Information aufweisenden Speicherbereich (SB) überprüft werden,
- bei dem diejenige Teilspeicherbereichfolge (TS), in der zumindest ein eine vorgegebene binäre Information aufweisender Speicherbereich (SB) festgestellt wurde, erneut in zwei gleich große, 2^{x-2} Speicherbereiche (SB) umfassende Teilspeicherbereiche (TS) aufgeteilt und diese auf das Vorhandensein von vorgegebene binäre Informationen aufweisenden Speicherbereichen (SB) überprüft wird und
- bei dem die Aufteilung und Überprüfung auf das Vorhandensein von vorgegebene binäre Informationen aufweisenden Speicherbereichen (SB) bis zum Erreichen einer 2¹ Speicherbereiche (SB) umfassenden Teilspeicherbereichsfolge (TS) durchgeführt wird.

5. Verfahren nach Anspruch 4,
**dadurch gekennzeichnet**,
daß jeweils zwei aufeinanderfolgende Speicherbereiche (SB) der Speicherbereichfolge (SBF) einem Suchspeicher (SM) zugeordnet sind und diese Suchspeicher (SM) eine erste Suchspeicherfolge (SF1) bilden.
- daß in Abhängigkeit von dem Vorhandensein von einer ein oder zwei vorgegebenen binären Informationen in den jeweils zwei zugeordneten Speicherbereichen (SB) in den zugeordneten Suchspeicherbereichen eine binäre Suchinformation eingetragen wird,
- daß jeweils zwei aufeinanderfolgende Suchspeicher (SM) der ersten Suchspeicherfolge (SF1) jeweils in weiteren Suchspeichern (SM), eine zweite Suchspeicherfolge (SF2) bildend, zugeordnet werden und in Abhängigkeit von dem Vorhandensein der in die beiden zugeordneten Suchspeicher (SM) eingetragenen binären Suchinformationen eine weitere binäre Suchinformation in den zugeordneten Speicherbereichen (SM) eingetragen wird,
- daß das Zuordnen von zwei Suchspeichern (SM) einer x-ten Suchspeicherfolge (SF) zu einem Suchspeicher (SM) der (x+1)-ten Suchspeicherfolge (SF) und dem Eintragen der binären Informationen in diese Suchspeicher (SM) der (x+1)-ten Suchspeicherfolge (SF) in Abhängigkeit von in den in die Suchspeicher (SM) der x-ten Suchspeicherfolge (SF) eingetragenen binären Informationen bis maximal zur m-ten Suchspeicherfolge (SF4) durchgeführt wird,
- daß ausgehend von einem Speicherbereich (SB) in dem zugeordneten Suchspeicher (SM) der ersten Suchspeicherfolge (SF1) das Vorhandensein einer vorgegebenen binären Information überprüft wird,
- daß bei Nichtvorhandensein der vorgegebenen binären Information in dem den Suchspeichern (SM) zugeordneten Suchspeicher (SM) der zweiten Suchspeicherfolge (SF2) und bei weiterem Nichtvorhandensein in weiteren zugeordneten Suchspeichern (SM) bis maximal zur m-ten Suchspeicherfolge (SF4) das Vorhandensein einer vorgegebenen binären Information überprüft wird und
- daß bei Vorhandensein einer vorgegebenen binären Information in der x-ten Suchspeicherfolge (SF), beginnend in der x-ten Suchspeicherfolge (SF), und jeweils beginnend in dem Suchspeicherfolgenanfang (SBA) oder -ende nächstgelegenen Suchspeicher (SM) das Vorhandensein einer vorgegebenen binären Information überprüft wird, wobei in Abhängigkeit von dem Auftreten der vorgegebenen binären Informationen in den jeweiligen Suchspeicher (SM) die beiden, diesem zugeordneten weiteren Suchspeicher (SM) überprüft werden.

## Claims

1. Method of searching for a highest-priority or lowest-priority memory area SB of a memory area sequence (SBF), formed by n - n ≤ 2^{m} - memory areas (SB1...SB16), for the purpose of a further processing of call-processing, administration-and-maintenance or dependability-system information items formed in a communication system and assigned to the memory area (SB) found,
- in which n priorities (1...16) are assigned to the memory area sequence (SBF) in ascending or descending order, beginning with the memory area sequence start (SBA) or end, and
- the presence or absence of a call-processing, administration-and-maintenance or dependability-system information item to be further processed, having a predetermined priority, is indicated by storing two different binary information items in the memory area (SB) corresponding to the predetermined priority,
- in which the memory area sequence (SBF) is divided into two equally sized partial memory area sequences (TS), comprising 2^{m-1} memory areas,
- in which the partial memory area sequences (TS) are checked, beginning with the one nearest the memory area sequence start (SBA) or end, for the presence of at least one memory area (SB) having a predetermined binary information item,
- in which that partial memory area sequence (TS) in which at least one memory area (SB) having a predetermined binary information item was found is divided once again into two equally sized partial memory areas (TS), comprising 2^{m-2} memory areas (SB), and these are checked for the presence of memory areas (SB) having predetermined binary information items, and
- in which the dividing and checking for the presence of memory areas (SB) having predetermined binary information items is carried out until a partial memory area sequence (TS) comprising 2¹ memory areas (SB) is reached.

2. Method according to Claim 1, characterized
- in that the binary information items assigned to the n memory areas (SB1...SB16) of the memory area sequence (SBF) are combined in a memory area sequence ascending or descending manner to form a binary, n-place binary number (B),
- in that the searching for the highest-priority or lowest-priority memory area (SB) having a predetermined binary information item is carried out as follows,
- in that the n-place binary number is compared with regard to the size of its binary value with a binary number (B) representing the binary value 2^{(m-1)},
- in that the smaller or larger partial binary number (EB, ZB) with respect to the binary value 2^{(m-1)} is compared with regard to the size of its binary value with a binary number representing the binary value 2^{(m-2)} and
- in that further m-2 binary number comparisons are carried out with regard to the size of the binary value of the respective partial binary number, determined in dependence on the comparison result, with respectively predetermined binary numbers representing the binary values 2^{(m-3)} to 2¹.

3. Method according to Claim 1, characterized
- in that in each case two successive memory areas (SB) of the memory area sequence (SBF) are assigned to a search memory (SM) and these search memories (SM) form a first search memory sequence (SF1)
- in that, in dependence on the presence of one or two predetermined binary information items in the in each case two assigned memory areas (SB), a binary search information item is entered in the assigned search memory areas (SM),
- in that in each case two successive search memories (SM) of the first search memory sequence (SF1) are respectively assigned to further search memories (SM), forming a second search memory sequence (SF2), and, in dependence on the presence of the binary search information items entered into the two assigned search memories (SM), a further binary search information item is entered in the assigned search memories (SM),
- in that the assigning of two search memories (SM) of an xth search memory sequence (SF) to a search memory (SM) of the (x+1)th search memory sequence (SF) and the entering of the binary information items into these search memories (SM) of the (x+1)th search memory sequence (SF) is carried out in dependence on binary information items entered into the search memories (SM) of the xth search memory sequence (SF) up to maximally the mth search memory sequence (SF4) and
- in that the presence of a predetermined binary information item is checked in the search memory sequences (SF1...SF4), beginning in the mth search memory sequence (SF4), and in each case beginning in the search memory (SM) nearest the search memory sequence start (SBA) or end, the occurrence of the predetermined binary information items in the respective search memories (SM) having the effect that the two further search memories (SM) assigned to them are checked.

4. Method of searching for a highest-priority or lowest-priority memory area (SB) of a memory area sequence (SBF), formed by n - n ≤ 2^{m} - memory areas (SB1...SB16), for the purpose of a further processing of call-processing, administration-and-maintenance or dependability-system information items formed in a communication system and assigned to the memory area (SB) found,
in which n priorities (1...16) are assigned to the memory area sequence (SBF) in ascending or descending order, beginning with the memory area sequence start (SBA) or end, and
- the presence or absence of a call-processing, administration-and-maintenance or dependability-system information item to be further processed, having a predetermined priority, is indicated by storing two different binary information items in the memory area (SB) corresponding to the predetermined priority,
- in which, starting from a memory area (SB) of the memory area sequence (SBF), the presence of a predetermined binary information item is checked in the neighbouring memory area (SB), nearest the memory area sequence start SAB or end, which is assigned to a partial memory area sequence (TS) comprising 2¹ memory areas,
- in which, in the absence of a predetermined binary information item, the second partial memory area sequence (TS), comprising 2² memory areas (SB), is checked for the presence of a predetermined binary information item and, in the further absence of predetermined binary information items, the partial memory area sequences (TS) comprising 2³ to 2^{m} memory areas (SB), maximally m memory areas, are checked for the presence of a predetermined binary information item, beginning with the memory areas (SB) nearest the memory area sequence start or end,
- in which, on finding a binary information item in a partial memory sequence (TS) comprising 2^{x} memory areas (SB), this sequence is divided into partial memory sequences (TS) comprising (2^{x}-1) memory areas,
- in which the two partial memory area sequences (TS) are checked, beginning with the one nearest the memory area sequence start (SBA) or end, for the presence of at least one memory area (SB) having a predetermined binary information item,
- in which that partial memory area sequence (TS) in which at least one memory area (SB) having a predetermined binary information item was found is divided once again into two equally sized partial memory areas (TS), comprising 2^{x-2} memory areas (SB), and these are checked for the presence of memory areas (SB) having predetermined binary information items and
- in which the dividing and checking for the presence of memory areas (SB) having predetermined binary information items are carried out until a partial memory area sequence (TS) comprising 21 memory areas (SB) is reached.

5. Method according to Claim 4, characterized
- in that in each case two successive memory areas (SB) of the memory area sequence (SBF) are assigned to a search memory (SM) and these search memories (SM) form a first search memory sequence (SF1),
- in that, in dependence on the presence of one or two predetermined binary information items in the in each case two assigned memory areas (SB), a binary search information item is entered in the assigned search memory areas,
- in that in each case two successive search memories (SM) of the first search memory sequence (SF1) are respectively assigned to further search memories (SM), forming a second search memory sequence (SF2), and, in dependence on the presence of the binary search information items entered into the two assigned search memories (SM), a further binary search information item is entered in the assigned search memories (SM),
- in that the assigning of two search memories (SM) of an xth search memory sequence (SF) to a search memory (SM) of the (x+1)th search memory sequence (SF) and the entering of the binary information items into these search memories (SM) of the (x+1)th search memory sequence (SF) is carried out in dependence on binary information items entered into the search memories (SM) of the xth search memory sequence (SF) up to maximally the mth search memory sequence (SF4)
- in that, starting from a memory area (SB) in the assigned search memory (SM) of the first search memory sequence (SF1), the presence of a predetermined binary information item is checked,
- in that, in the absence of the predetermined binary information item in the search memory (SM) of the second search memory sequence (SF2) assigned to the search memories (SM), and in the further absence in further assigned search memories (SM), the presence of a predetermined binary information item is checked up to maximally the mth search memory sequence (SF4) and
- in that, in the presence of a predetermined binary information item in the xth search memory sequence (SF), the presence of a predetermined binary information item is checked, beginning in the xth search memory sequence (SF), and in each case beginning in the search memory (SM) nearest the search memory sequence start (SBA) or end, the occurrence of the predetermined binary information items in the respective search memories (SM) having the effect that the two further search memories (SM) assigned to them are checked.

## Revendications

1. Procédé de recherche d'une zone SB de mémoire de poids le plus haut ou de poids le plus faible parmi une suite (SBF) de zones de mémoire formée de n zones (SB1 à SB16) de mémoire (n≤2^{m}), en vue d'un traitement ultérieur d'informations de commutation, de fonctionnement ou de sécurité associées à la zone (SB) de mémoire trouvée et formées dans un système de communication,
- dans lequel on associe à la suite (SBF) des zones de mémoire n poids (1 à 16) en commençant au début (SBA) ou à la fin de la suite des zones de mémoire dans l'ordre croissant ou décroissant et
- on indique la présence ou l'absence d'une information de commutation, de fonctionnement ou de sécurité à traiter ensuite et ayant un poids prescrit par mémorisation de deux informations binaires différentes dans la zone (SB) de mémoire correspondant au poids prescrit,
- on subdivise la suite (SBF) des zones de mémoire en deux suites (TS) partielles des zones de mémoire comprenant le même nombre 2^{m-1} zones de mémoire,
- dans lequel on contrôle la présence d'au moins une zone (SB) de mémoire comportant une information binaire prescrite dans les suites (TS) partielles de zones de mémoire en commençant par la zone la plus proche du début (SBA) ou de la fin de la suite de zones de mémoire,
- dans lequel on subdivise de nouveau celle des suites (TS) partielles des zones de mémoire, dans laquelle on a détecté une zone (SB) de mémoire ayant une information binaire prescrite, en deux zones (TS) de mémoire partielles comprenant un même nombre de 2^{m-2} zones (SB) de mémoire et on contrôle la présence dans celles-ci de zones (SB) de mémoire ayant des informations binaires prescrites et
- dans lequel on effectue la subdivision et le contrôle de la présence de zones (SB) de mémoire comportant des informations binaires prescrites jusqu'à atteindre une suite (TS) partielle de zones de mémoire comprenant 2¹ zones (SB) de mémoire.

2. Procédé suivant la revendication 1,
caractérisé en ce que
- on rassemble les informations binaires de la suite (SBF) de zones de mémoire, associées à n zones (SB1 à SB16) de mémoire dans l'ordre croissant ou décroissant de la suite des zones de mémoire en un nombre (B) binaire à n chiffres,
- on effectue la recherche de la zone (SB) de mémoire de poids le plus fort ou de poids le plus faible et ayant une information binaire prescrite, de telle sorte que
- l'on compare la valeur binaire du nombre binaire à n chiffres à un nombre binaire (B) représentant la valeur binaire 2^{(m-1)},
- on compare la valeur binaire du nombre binaire partiel (EB, ZB) plus grand ou plus petit que la valeur binaire 2^{(m-1)} à un nombre binaire représentant la valeur binaire 2^{(m-2)} et
- on effectue m-2 comparaisons supplémentaires de la valeur binaire de chaque nombre binaire partiel déterminé en fonction du résultat de la comparaison, à des nombres binaires prescrits et représentant les valeurs binaires 2^{(m-3)} à 2¹.

3. Procédé suivant la revendication 1,
caractérisé en ce que
- deux zones (SB) de mémoire se suivant de la suite (SBF) de zones de mémoire sont associées à une mémoire (SM) de recherche et ces mémoires (SM) de recherche forment une première suite (SF1) de mémoires de recherche,
- on enregistre, en fonction de la présence de une ou de deux informations binaires prescrites dans les deux zones (SB) de mémoire associées une information binaire de recherche dans les zones (SM) de mémoire de recherche associées,
- on associe deux mémoires (SM) de recherche se suivant de la première suite (SF1) de mémoires de recherche dans d'autres mémoires (SM) de recherche en formant une seconde suite (SF2) de mémoires de recherche et on enregistre, en fonction de la présence des informations binaires de recherche enregistrées dans les deux mémoires (SM) de recherche associées, une information binaire supplémentaire de recherche dans les mémoires (SM) de recherche associées,
- on effectue l'association de deux mémoires (SM) de recherche d'une x-ième suite (SF) de mémoires de recherche à une mémoire (SM) de recherche de la (x+1)ième suite (SF) de mémoires de recherche et l'enregistrement des informations binaires dans ces mémoires (SM) de recherche de la (x+1)ième suite (SF) de mémoires de recherche en fonction d'informations binaires enregistrées dans les mémoires (SM) de recherche de la x-ième suite (SF) de mémoires de recherche jusqu'à au maximum la m-ième suite (SF4) de mémoires de recherche et
- on contrôle la présence d'une information binaire prescrite dans les suites (SF1 à SF4) de mémoires de recherche en commençant par la m-ième suite (SF4) de mémoires de recherche et en commençant par la mémoire (SM) de recherche la plus proche du début (SBA) ou de la fin de la suite de mémoires de recherche, les deux mémoires supplémentaires associées (SM) de recherche étant contrôlées en fonction de l'apparition des informations binaires prescrites dans les mémoires (SM) de recherche.

4. Procédé de recherche d'une zone (SB) de mémoire de poids le plus fort ou de poids le plus faible parmi une suite (SBF) de zones de mémoire formées de n zones (SB1 à SB16) de mémoire (n≤2^{m}), en vue d'un traitement ultérieur d'informations de commutation, de fonctionnement ou de sécurité associées à la zone (SB) de mémoire trouvée et formées dans un système de communication,
dans lequel on associe à la suite (SBF) des zones de mémoire n poids (1 à 16) en commençant par le début (SBA) ou la fin de la suite de zones de mémoire dans l'ordre croissant ou décroissant et
- on indique la présence ou l'absence d'une information de commutation, de fonctionnement ou de sécurité à traiter ultérieurement et ayant un poids prescrit par mémorisation de deux informations binaires différentes dans la zone (SB) de mémoire correspondant au poids prescrit,
- on contrôle la présence d'une information binaire prescrite dans la zone (SB) de mémoire voisine, la plus proche du début (SAB) ou de la fin de la suite de zones de mémoire et associée à une suite (TS) partielle de zones de mémoire comprenant 2¹ zones de mémoire, en partant d'une zone (SB) de mémoire de la suite (SBF) de zones de mémoire,
- dans lequel on contrôle, en cas d'absence d'une information binaire prescrite, la présence d'une information binaire prescrite dans la seconde suite (TS) partielle de zones de mémoire comprenant 2² zones (SB) de mémoire et, en cas d'absence à nouveau d'informations binaires prescrites, la présence d'une information binaire prescrite dans les au maximum m suites (TS) partielles de zones de mémoire comprenant 2³ à 2^{m} zones (SB) de mémoire, en commençant par les zones (SB) de mémoire les plus proches du début ou de la fin des suites de zones de mémoire,
- dans lequel on subdivise, lorsque l'on détecte une information binaire dans une suite (TS) partielle de zones de mémoire comprenant 2^{x} zones (SB) de mémoire, celle-ci en suites (TS) partielles de zones de mémoire en comprenant (2^{x-1}),
- dans lequel en contrôle la présence d'une zone de mémoire (SB) comportant au moins une information binaire prescrite dans les deux suites (TS) partielles de zones de mémoire en commençant par la plus proche du début (SBA) ou de la fin des suites de zones de mémoire,
- dans lequel on subdivise celle des suites (TS) partielles de zones de mémoire, dans laquelle on a détecté au moins une zone (SB) de mémoire comportant une information binaire prescrite, de nouveau en deux zones (TS) de mémoire partielles de même taille et comprenant 2^{x-2} zones (SB) de mémoire et on contrôle la présence dans celle-ci de zones (SB) de mémoire comportant des informations binaires prescrites et
- dans lequel on effectue la subdivision et le contrôle de la présence de zones (SB) de mémoire comportant des informations binaires prescrites jusqu'à atteindre une suite (TS) partielle de zones de mémoire comprenant 2¹ zones (SB) de mémoire.

5. Procédé suivant la revendication 4,
caractérisé en ce que
il est associé deux zones (SB) de mémoire se suivant de la suite (SBF) de zones de mémoire à une mémoire (SM) de recherche et cette mémoire (SM) de recherche forme une première suite (SF1) de mémoires de recherche,
- on enregistre, en fonction de la présence d'une ou de deux informations binaires prescrites dans les deux zones (SB) de mémoire associées, une information binaire de recherche dans les zones de mémoire de recherche associées,
- on associe deux mémoires (SM) de recherche se suivant de la première suite (SF1) de mémoires de recherche, dans des mémoires (SM) supplémentaires de recherche en formant une seconde suite (SF2) de mémoires de recherche et on enregistre, en fonction de la présence des informations binaires de recherche enregistrées dans les deux mémoires (SM) de recherche associées, une information binaire supplémentaire de recherche dans les mémoires (SM) de recherche associées,
- on effectue l'association de deux mémoires (SM) de recherche d'une x-ième suite (SF) de mémoires de recherche à une mémoire (SM) de recherche de la (x+1)ième suite (SF) de mémoires de recherche et l'enregistrement des informations binaires dans ces mémoires (SM) de recherche de la (x+1)ième suite (SF) de mémoires de recherche en fonction d'informations binaires enregistrées dans les mémoires (SM) de recherche de la x-ième suite (SF) de mémoires de recherche jusqu'à au maximum la m-ième suite (SF4) de mémoires de recherche,
- on contrôle la présence d'une information binaire prescrite dans la mémoire (SM) associée de recherche de la première suite (SF1) de mémoires de recherche en partant d'une zone (SB) de mémoire,
- on contrôle la présence d'un information binaire prescrite dans la mémoire (SM) de recherche, associée aux mémoires (SM) de recherche, de la seconde suite (SF2) de mémoires de recherche en cas d'absence de l'information binaire prescrite et on contrôle la présence d'une information binaire prescrite dans d'autres mémoires (SM) de recherche associées en cas d'absence ultérieure, jusqu'à au maximum la m-ième suite (SF4) de mémoires de recherche et
- on contrôle la présence d'une information binaire prescrite en présence d'une information binaire prescrite dans la x-ième suite (SF) de mémoires de recherche en commençant par la x-ième suite (SF) de mémoires de recherche et en commençant dans la mémoire (SM) de recherche la plus proche du début (SBA) ou de la fin de la suite de mémoires de recherche, on contrôle, en fonction de l'apparition des informations binaires prescrites dans la mémoire (SM) de recherche respective les deux mémoires (SM) de recherche supplémentaire associées à celle-ci.
